# EUROPEAN PATENT APPLICATION

(11) **EP 3 070 968 A1**
(43) Date of publication of application: **21.09.2016**
(21) Application number: 14860688.2
(22) Date of filing: 10.11.2014
(51) Int. Cl.: H04W 4/00

(54) **VEHICLE INFORMATION PROCESSING SYSTEM, METHOD, VEHICLE-MOUNTED DEVICE AND STORAGE MEDIUM**

(30) Priority: 11.11.2013 CN 201310557891
(71) Applicant: BYD Company Limited, Shenzhen, Guangdong 518118 (CN)
(72) Inventor: DU, Xiaowen, Shenzhen Guangdong 518118 (CN); LIU, Lianjie, Shenzhen Guangdong 518118 (CN); YANG, Yueming, Shenzhen Guangdong 518118 (CN); ZHONG, Yilin, Shenzhen Guangdong 518118 (CN); BAI, Junming, Shenzhen Guangdong 518118 (CN); FAN, Bo, Shenzhen Guangdong 518118 (CN)
(74) Representative: Hoffmann Eitle
(86) International application number: PCT/CN2014/090751
(87) International publication number: WO 2015/067217

(57) **Abstract**

The present invention provides an information processing system and method for a car, a in-vehicle device and a storage medium. The system includes a mobile terminal and a in-vehicle device, where the in-vehicle device includes: a communication module, where the communication module is used for communicating with the mobile terminal; and an information station, where the information station is used for receiving a query instruction sent by the mobile terminal through the communication module, acquiring vehicle condition information of the car according to the query instruction, and sending the acquired vehicle condition information to the mobile terminal through the communication module, and/or pushing the acquired vehicle condition information to the mobile terminal through the communication module at preset time intervals. By using the system according to an embodiment of the present invention, a user can send a query instruction in real time through a communication module, acquire vehicle condition information of the car in real time, or receive vehicle condition information pushed by an information station in real time. Thus, it is easy for the user to know the state of the vehicle in real time, so that the user can control the vehicle information more conveniently, and user experience is improved.

## Description

### BACKGROUND

### Technical Field

The present invention relates to the field of communications technologies, and in particular, to an information processing system, an information processing method for a car, an in-vehicle device and a storage medium.

### Related Art

In recent years, with continuous improvement of people's living standard and gradual increase of the number of cars, the cars also gradually become people's travel necessities. In-vehicle information stations on the cars can store various kinds of vehicle condition information on the cars, and source times and locations of the vehicle condition information and so on, for example, the total fuel consumption, total travelled distance, vehicle failure state, or fault history and other information.

Currently, a user can check vehicle condition information of a car stored in an in-vehicle information station on a display screen of the car. However, with the owner's increasingly higher requirement for the car, the owner often hopes to know current states and history states of the car in real time, and thus the existing manner cannot meet the user's demand, and the user experience is poor.

### SUMMARY

The present invention aims at solving at least one of the above technical problems.

To this end, a first objective of the present invention is to provide an information processing system for a car. The system enables a user to know the state of a vehicle in real time, so that the user can obtain the vehicle information more conveniently, and the user experience is improved.

A second objective of the present invention is to provide an information processing method for a car.

A third objective of the present invention is to provide an in-vehicle device.

A fourth objective of the present invention is to provide a storage medium.

To achieve the above objective, the information processing system for a car according to an embodiment in a first aspect of the present invention includes a mobile terminal and an in-vehicle device, wherein the in-vehicle device includes: a communication module, configured to communicate with the mobile terminal; and an information station, configured to receive a query instruction sent by the mobile terminal via the communication module, to acquire vehicle condition information of the car according to the query instruction, to send the acquired vehicle condition information to the mobile terminal via the communication module, and/or to push the acquired vehicle condition information to the mobile terminal via the communication module at preset time intervals.

With the information processing system for a car according to the embodiment of the present invention, a user can send a query instruction in real time via a communication module, acquire vehicle condition information of the car, or receive vehicle condition information pushed by an information station in real time. Thus, it is easy for the user to know the state of the vehicle in real time, so that the user can obtain the vehicle information more conveniently, and the user experience is improved.

To achieve the above objective, the information processing method for a car according to an embodiment in a second aspect of the present invention includes: receiving a query instruction sent by a mobile terminal; acquiring vehicle condition information of the car according to the query instruction; and sending the acquired vehicle condition information to the mobile terminal.

By using the information processing method for a car according to the embodiment of the present invention, a user can send a query instruction in real time through a communication module, acquire vehicle condition information of the car, or receive vehicle condition information pushed by an information station in real time. Thus, it is easy for the user to know the state of the vehicle in real time, so that the user can obtain the vehicle information more conveniently, and the user experience is improved.

To achieve the above objective, the in-vehicle device according an embodiment in a third aspect of the present invention includes: a communication module, configured to communicate with the mobile terminal; and an information station, configured to receive a query instruction sent by the mobile terminal via the communication module, to acquire vehicle condition information of the car according to the query instruction, to acquire the acquired vehicle condition information to the mobile terminal via the communication module, and/or to push the acquired vehicle condition information to the mobile terminal via the communication module at preset time intervals.

With the in-vehicle device according to the embodiment of the present invention, a user can send a query instruction in real time via a communication module, acquire vehicle condition information of the car, or receive vehicle condition information pushed by an information station in real time. Thus, it is easy for the user to know the state of the vehicle in real time, so that the user can obtain the vehicle information more conveniently, and the experience of the user is improved.

To achieve the above objective, the storage medium according an embodiment in a fourth aspect of the present invention is configured to store an application program, wherein the application program, is configured to perform the above method during operation.

With the storage medium according to the embodiment of the present invention, a user can send a query instruction in real time via a communication module, acquire vehicle condition information of the car, or receive vehicle condition information pushed by an information station. Thus, it is easy for the user to know the state of the vehicle in real time, so that the user can obtain the vehicle information more conveniently, and the user experience is improved.

Additional aspects and advantages of the present invention will be partially illustrated in the following description, and some will become evident from the following description or understood through implementation of the present invention.

### BRIEF DESCRIPTION OF THE DRAWINGS

The aforementioned and/or additional aspects and advantages of the present invention will become evident and easy to understand from the following description about embodiments with reference to the accompanying drawings, and wherein:
FIG. 1 is a schematic diagram of an information processing system for a car according to an embodiment of the present invention;
FIG. 2 is a flow chart of an information processing method for a car according to an embodiment of the present invention;
FIG. 3 is a flow chart of an information processing method for a car according to another embodiment of the present invention; and
FIG. 4 is a schematic diagram of an in-vehicle device according to an embodiment of the present invention.

### DETAILED DESCRIPTION

Embodiments of the present invention are described in detail below. Examples of the embodiments are shown in the accompanying drawings. Same or similar reference signs represent same or similar elements or element having same or similar functions. The following embodiments described with reference to the accompanying drawings are exemplary, are intended to explain the present invention, and shall not be understood as limitations on the present invention. On the contrary, the embodiments of the present invention include all variations, modifications and equivalents that fall within the spirit and connotation range of the appended claims.

In the description of the present invention, it should be noted that the terms "first" and "second" are merely intended for description, and do not indicate or imply relative importance. In the description of the present invention, it should be noted that, unless otherwise explicitly stipulated and defined, the terms "connected with" and "connect" should be understood in a broad sense, for example, it may be a fixed connection, a detachable connection or an integral connection, may be a mechanical connection or an electrical connection, may be a direct connection or a connection through an intermediate medium. For those of ordinary skill in the art, the specific meanings of the terms in the present invention can be understood according to specific situations. In addition, in the description of the present invention, unless otherwise indicated, the meaning of "multiple" is two or more.

Any process or method in the flow chart or described herein in other manners can be understood as indicating a module, segment or section of code including one or more executable instructions used for achieving particular logic functions or process steps, and the scope of the preferred embodiments of the present invention includes another implementation, wherein functions may be executed not in an illustrated or discussed order, including a basically simultaneous manner according to the functions involved or in a reverse order, and this should be understood by those skilled in the art.

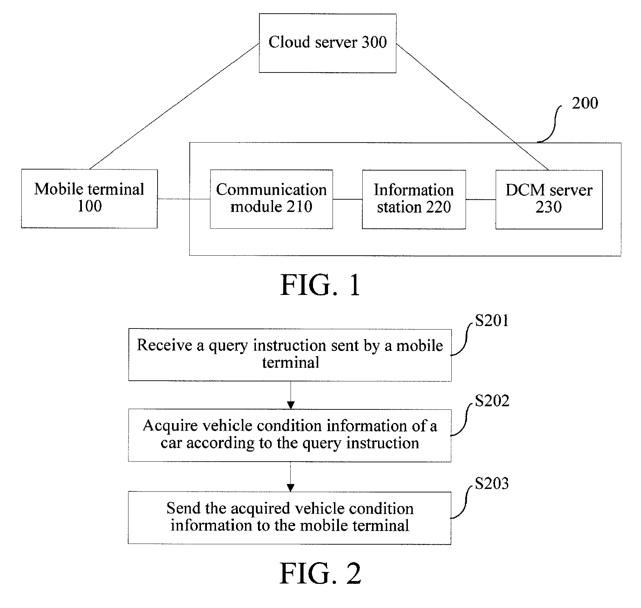

FIG. 1 is a schematic diagram of an information processing system for a car according to an embodiment of the present invention.

As shown in FIG. 1, the information processing system for a car includes a mobile terminal 100, an in-vehicle device 200 and a cloud server 300, where the in-vehicle device 200 includes: a communication module 210, an information station 220 and a DCM server 230.

In an embodiment, the communication module 210 is used for communicating with the mobile terminal 100. In an embodiment, the communication module 210 may be an in-vehicle Bluetooth module, a 3G module, a Wifi module, an infrared module and so on. The communication module 210 is installed in the car, and after the mobile terminal 100 and the communication module 210 establish a communication, the communication module 210 may output a query instruction sent by a user via a mobile terminal device 100 such as a mobile phone, a tablet computer or a Personal Digital Assistant (PDA) to the information station 220. In an embodiment, the communication module 210 is an in-vehicle Bluetooth module, and the mobile terminal 100 and the in-vehicle device 200 are connected with each other via the in-vehicle Bluetooth module, which can prevent the problem that vehicle condition information cannot be acquired due to network signal failure, cannot consume the traffic of the mobile terminal 100, and can reduce resources consumed by the car owner while more information of the car is acquired.

The information station 220 is used for receiving a query instruction sent by the mobile terminal 100 via the communication module 210, acquiring vehicle condition information of the car according to the query instruction, and sending the acquired vehicle condition information to the mobile terminal 100 through the communication module 210, and/or pushing the acquired vehicle condition information to the mobile terminal 100 through the communication module at preset time intervals. The vehicle condition information may include, but is not limited to, any one or more of total fuel consumption, total distance, average fuel consumption, vehicle states and wear conditions of parts. More specifically, the information station 220 is installed inside the car, and the communication module 210 and a single chip processor may be integrated in the information station 220. In other words, the information station 220 may acquire vehicle condition information of the car according to the query instruction received by the communication module 210, and then return the vehicle condition information to the mobile terminal 100 through the communication module 210. Thus, the user can check the current vehicle condition information of the car from the mobile terminal 100.

Further, the in-vehicle device further includes a DCM server 230. In an embodiment, the DCM server 230 is connected with the information station 220, and is used for acquiring the vehicle condition information of the car in real time, and after the query instruction is received from the information station 220, generating CAN message data information of the car according to the acquired vehicle condition information and sending the CAN message data information to the information station 220. The information station 220 sends the received CAN message data information to the mobile terminal 100 through the communication module 210. In other words, the information station 220 forwards the received query instruction to the DCM server 230, and the DCM server 230 is in response to the query instruction forwarded by the information station 220, at the same time acquires the vehicle condition information of the car, then generates CAN message data information of the car according to the acquired vehicle condition information, and sends the CAN message data information to the information station 220. The information station 220 may send the CAN message data information to the mobile terminal 100 through the communication module 210, and the mobile terminal 100 may parse the CAN message data information according to a protocol in the mobile terminal 100, to obtain text information that can be identified by the user, so that the user can view the information conveniently.

In addition, the DCM server 230 is further used for pushing updated CAN message data information to the information station 220 at preset time intervals, and the information station 220 pushes the received updated CAN message data information to the mobile terminal 100 through the communication module 210, so that the mobile terminal 100 updates the CAN message data information stored in the mobile terminal 100 with the pushed updated CAN message data information. The preset time interval may be a default value in the DCM server, and may also be set by the user in the in-vehicle device 200 according to own demand. Specifically, the DCM server 230 can push the latest CAN message data information to the information station 220 at preset time intervals, and the information station 220 pushes the latest CAN message data information to the mobile terminal 100. The mobile terminal 100 updates the original CAN message data information in the mobile terminal 100. Thus, when the user needs to check the information in the mobile terminal 100, the user can view the latest data information.

In an embodiment of the present invention, the information processing system for a car further includes a cloud server 300. In an embodiment, the cloud server 300 is used for receiving the vehicle condition information uploaded by the mobile terminal 100, and storing the vehicle condition information. In an embodiment, after the mobile terminal 100 receives the current vehicle condition information of the car sent by the information station 200, it is also feasible to upload the received vehicle condition information to the cloud server 300 through 3rd-generation (3G), Wireless Fidelity (Wifi) and other wireless networks, to make the cloud server 300 save the received vehicle condition information in a database of the cloud server. Thus, when the user needs to check history data information of the car, the user may send a request to the cloud server 300, and then download history vehicle condition information from the cloud server 300. In addition, a manufacturer may also analyze and process the vehicle condition information of the car stored in the cloud server 300 to timely find concentration points of product problems and the user's experience feeling, helping to improve the quality of the product.

In an embodiment of the present invention, the cloud server 300 is further used for receiving the CAN message data information uploaded from the DCM server 230, and storing the CAN message data information. In an embodiment, after the DCM server 230 is generating CAN message data information according to the acquired vehicle condition information, the DCM server 230 may also upload the CAN message data information to the cloud server 300 through a built-in 3G or other wireless communication module, and the cloud server 300 may store the received CAN message data information in the database of the cloud server. Thus, when it is needed to check the history data information of the car, the user may send a request to the cloud server 300, and then download the history CAN message data information from the cloud server 300.

In an embodiment of the present invention, the cloud server 300 is further used for receiving login information sent by the mobile terminal 100, authenticating the login information, and when the authentication is passed, sending stored history vehicle condition information to the mobile terminal 100. For example, the user needs to register on the cloud server 300. In an embodiment, the user may fill in information related to the owner or the vehicle during registration, and if the related information filled in by the user is not consistent with the information stored in the cloud server 300, the cloud server 300 prompts that user registration is not successful. After the user successfully registers, the user may enter login information to perform a login operation when opening an application on the mobile terminal 100, in other words, the cloud server 300 needs to authenticate the identity of the user. If the cloud server 300 determines that the user is an authorized user, the cloud server 300 prompts that the user successfully logs in. After the user logs in to the application, the mobile terminal 100 downloads corresponding history vehicle condition information from the cloud server 300, and loads the history vehicle condition information for the user to check. Thus, not only can security be improved to ensure that the user's privacy information is not leaked, but also personalized data from the user and potential users can be acquired, and information of user groups can be better obtained.

In an embodiment of the present invention, the mobile terminal 100 encrypts the query instruction and then sends the encrypted query instruction to the information station via the communication module 210 of the in-vehicle device. The information station 200, after receiving the query instruction, decrypts the query instruction, if it is determined that the user is an authorized user, acquires the vehicle condition information of the car according to the query instruction, and sends the acquired vehicle condition information to the mobile terminal 100 through the communication module 210. Specifically, before sending a query instruction of requesting CAN message data information to the information station 220, the mobile terminal 100 may encrypt the query instruction and user registration information through an encryption algorithm, where the existing method may be used as the encryption algorithm, which is not described in detail herein. The information station 220, after receiving the encrypted query instruction and user registration information, may decrypt them, and after it is determined that the user is an authorized user, sends the acquired vehicle condition information to the mobile terminal 100. Thus, the security can be further improved, to prevent the user privacy information from being leaked.

In an embodiment of the present invention, the cloud server 300 is further used for analyzing the vehicle condition information, to acquire state management information of the car, and pushing the state management information to the mobile terminal 100. Specifically, the cloud server 300 calculates and analyzes the vehicle condition information, to obtain analysis results such as whether the parts of the car fail or need to be replaced and the like, and then pushes the analysis results as state management information of the car to the mobile terminal 100. Thus, the user can know vehicle information of the car more timely and conveniently, and by calculating and analyzing vehicle condition information of the user, personalized, accurate and intelligent information pushing and service promotion for the user can be achieved.

By using the information processing system for a car according to the embodiment of the present invention, a user can send a query instruction in real time through a communication module, acquire vehicle condition information of the car, or receive vehicle condition information pushed by an information station in real time. Thus, it is easy for the user to know the state of the vehicle in real time, so that the user can control the vehicle information more conveniently, and user experience is improved.

To achieve the above objective, the present invention further provides an information processing method for a car.

An information processing method for a car, including: receiving a query instruction sent by a mobile terminal; acquiring vehicle condition information of the car according to the query instruction; and sending the acquired vehicle condition information to the mobile terminal.

FIG. 2 is a flow chart of an information processing method for a car according to an embodiment of the present invention.

As shown in FIG. 2, the information processing method for a car includes the following steps.

S201. Receive a query instruction sent by a mobile terminal.

Specifically, the in-vehicle device may receive a query instruction sent, through a mobile terminal device such as a mobile phone, a PAD or a PDA, by a user through a communication module such as a in-vehicle Bluetooth module, a 3G module, a Wifi module, an infrared module or the like. Preferably, the in-vehicle device may receive a query instruction sent by a mobile terminal through a in-vehicle Bluetooth module, which thus prevents the problem that vehicle condition information cannot be acquired due to network signal failure, may not consume the traffic of the mobile terminal 100, and reduces resources consumed by the owner while more information of the car is acquired.

S202. Acquire vehicle condition information of the car according to the query instruction.

The vehicle condition information includes, but is not limited to, any one or more of the total fuel consumption, the total distance, average fuel consumption, vehicle states and wear conditions of parts. Specifically, the in-vehicle device acquires the vehicle condition information while responding to the query instruction.

S203. Send the acquired vehicle condition information to the mobile terminal.

In an embodiment of the present invention, CAN message data information of the car is generated according to the acquired vehicle condition information, and the received CAN message data information is sent to the mobile terminal. Specifically, after acquiring the vehicle condition information of the car, the in-vehicle device generates CAN message data information according to the acquired vehicle condition information, and sends the CAN message data information to the mobile terminal through a communication module such as a in-vehicle Bluetooth module, a 3G module, a Wifi module, an infrared module or the like, and the mobile terminal may parse the CAN message data information through a protocol in the mobile terminal, which is parsed into text information that can be identified by the user, to facilitate the user to check it.

In an embodiment of the present invention, updated CAN message data information is pushed to the mobile terminal at preset time intervals, so that the mobile terminal updates the CAN message data information stored in the mobile terminal with the pushed updated CAN message data information. The preset time interval may be a default value in the system, and may also be set by the user in the system according to own demand. Specifically, the in-vehicle device can push the latest CAN message data information to the mobile terminal through the communication module. The mobile terminal updates the original CAN message data information in the mobile terminal. Thus, when the user needs to check it in the mobile terminal, the user can check the latest data information.

By using the information processing method for a car according to the embodiment of the present invention, a user can send a query instruction in real time through a communication module, acquire vehicle condition information of the car, or receive vehicle condition information pushed by an information station in real time. Thus, it is easy for the user to know the state of the vehicle in real time, so that the user can control the vehicle information more conveniently, and user experience is improved.

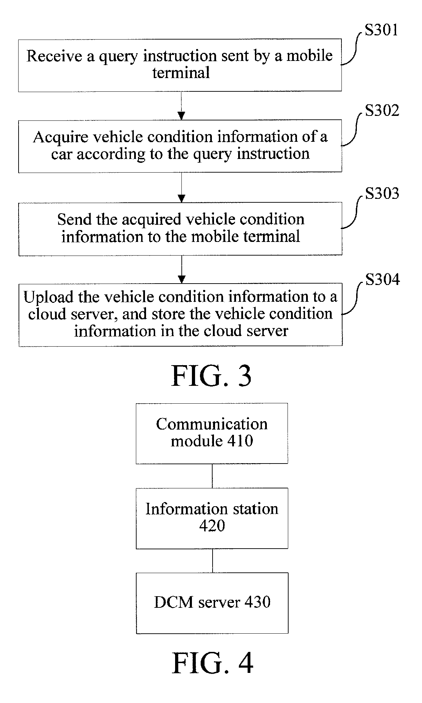

FIG. 3 is a flow chart of an information processing method for a car according to a specific embodiment of the present invention.

S301. Receive a query instruction sent by a mobile terminal.

S302. Acquire vehicle condition information of the car according to the query instruction.

The vehicle condition information includes, but is not limited to, any one or more of the total fuel consumption, the total distance, average fuel consumption, vehicle states and wear conditions of parts.

S303. Send the acquired vehicle condition information to the mobile terminal.

In an embodiment of the present invention, CAN message data information of the car is generated according to the acquired vehicle condition information, and the received CAN message data information is sent to the mobile terminal.

In an embodiment of the present invention, updated CAN message data information is pushed to the mobile terminal at preset time intervals, so that the mobile terminal updates the CAN message data information stored in the mobile terminal with the pushed updated CAN message data information.

S304. Upload the vehicle condition information to a cloud server, and store the vehicle condition information in the cloud server.

Specifically, after receiving current vehicle condition information of the car, the mobile terminal may upload the received vehicle condition information to a cloud server through a wireless network such as 3G or Wifi, to make the cloud server store the received vehicle condition information into a database of the cloud server. Thus, when it is needed to check history data information of the car, the user may send a request to the cloud server and then download history vehicle condition information from the cloud server. In addition, a manufacturer may also analyze and process the vehicle condition information of the car stored in the cloud server to timely find concentration points of product problems and the user's experience feeling, helping to improve the quality of the product.

Through the information processing method for a car according to the embodiment of the present invention, a user can know condition information of the vehicle at any time, and a connection is not made through a communication module, it is also feasible to check history condition information of the car through a cloud server, causing the owner to better know the state of the car.

To achieve the above objective, the present invention further proposes a in-vehicle device.

An in-vehicle device includes a communication module, where the communication module is used for communicating with the mobile terminal; and an information station, where the information station is used for receiving a query instruction sent by the mobile terminal through the communication module, acquiring vehicle condition information of the car according to the query instruction, and sending the acquired vehicle condition information to the mobile terminal through the communication module, and/or pushing the acquired vehicle condition information to the mobile terminal through the communication module at preset time intervals.

FIG. 4 is a schematic structural diagram of a in-vehicle device according to an embodiment of the present invention.

As shown in FIG. 4, the in-vehicle device includes a communication module 410, an information station 420 and a DCM server 430.

In an embodiment, the communication module 410 is used for communicating with the mobile terminal. More specifically, the communication module 410 may be an in-vehicle Bluetooth module, a 3G module, a Wifi module, an infrared module or the like. The communication module 410 is installed inside the car, and after the mobile terminal 100 and the communication module 210 establish a communication, the communication module 410 may forward a query instruction sent by a user through a mobile terminal device such as a mobile phone, a tablet computer or a Personal Digital Assistant (PDA) to the information station 420. In an embodiment, the communication module 410 is a in-vehicle Bluetooth module, and the mobile terminal 100 and the in-vehicle device 200 are connected with each other via the in-vehicle Bluetooth module, which thus avoids a drawback that vehicle condition information cannot be acquired due to network signal problems, may not consume the traffic of the mobile terminal, and reduces resources consumed by the owner while more information of the car is acquired.

The information station 420 is used for receiving a query instruction sent by the mobile terminal through the communication module, acquiring vehicle condition information of the car according to the query instruction, and sending the acquired vehicle condition information to the mobile terminal through the communication module 410, and/or pushing the acquired vehicle condition information to the mobile terminal through the communication module at preset time intervals. The vehicle condition information may include, but is not limited to, any one or more of the total fuel consumption, the total distance, average fuel consumption, vehicle states and wear conditions of parts. More specifically, the information station 420 is installed inside the car, and the communication module 410 and a single chip processor may be integrated in the information station 420. In other words, the information station 420 may acquire vehicle condition information of the car through the query instruction received by the communication module 410, and then return the vehicle condition information to the mobile terminal through the communication module 410. Thus, the user can check the current vehicle condition information of the car in the mobile terminal.

In an embodiment of the present invention, the in-vehicle device further includes a DCM server 430. Specifically, the DCM server 430 is connected with the information station 420, used for acquiring the vehicle condition information of the car in real time, and after the query instruction is received from the information station 420, generating CAN message data information of the car according to the acquired vehicle condition information and sending the CAN message data information to the information station 420, and the information station 420 sends the received CAN message data information to the mobile terminal through the communication module 410. In other words, the information station 420 forwards the received query instruction to the DCM server 430, and the DCM server 430, in response to the query instruction forwarded by the information station 420, acquires the vehicle condition information of the car, then generates CAN message data information of the car according to the acquired vehicle condition information, and sends the CAN message data information to the information station 420. The information station 420 may send the CAN message data information to the mobile terminal through the communication module 410, and the mobile terminal may parse the CAN message data information through a protocol in the mobile terminal, which is parsed into text information that can be identified by the user, to facilitate the user to check it.

In an embodiment of the present invention, the DCM server 430 is further used for pushing updated CAN message data information to the information station 420 at preset time intervals, and the information station 420 pushes the received updated CAN message data information to the mobile terminal through the communication module 410, so that the mobile terminal updates the CAN message data information stored in the mobile terminal with the pushed updated CAN message data information. The preset time interval may be a default value in the DCM server, and may also be set by the user in the in-vehicle device according to own demand. Specifically, the DCM server 430 can push the latest CAN message data information to the information station 420 at preset time intervals, and the information station 420 pushes the latest CAN message data information to the mobile terminal. The mobile terminal updates the original CAN message data information in the mobile terminal. Thus, when the user needs to check it in the mobile terminal 100, the user can check the latest data information.

By using the in-vehicle device according to the embodiment of the present invention, a user can send a query instruction in real time through a communication module, acquire vehicle condition information of the car in real time, or receive vehicle condition information pushed by an information station in real time. Thus, it is easy for the user to know the state of the vehicle in real time, so that the user can control the vehicle information more conveniently, and user experience is improved.

To achieve the above embodiment, the present invention further proposes a storage medium, used for storing an application, the application, during operation, being used for performing the information processing method for a car as described in the embodiment of the present invention.

By using the storage medium according to the embodiment of the present invention, a user can send a query instruction in real time through a communication module, acquire vehicle condition information of the car, or receive vehicle condition information pushed by an information station. Thus, it is easy for the user to know the state of the vehicle in real time, so that the user can control the vehicle information more conveniently, and user experience is improved.

It should be understood that various parts of the present invention can be achieved through hardware, software, firmware or a combination thereof.

In the above implementation mode, multiple steps or methods can be achieved by using software or firmware stored in a memory and executed by a suitable instruction execution system. For example, if they are achieved by hardware, like in another implementation mode, they can be achieved by using any one of the following technologies well-known in this field or a combination thereof: a discrete logic circuit having a logic gate circuit used for achieving a logic function on a data signal, an application-specific integrated circuit having a suitable combined logic gate circuit, a programmable gate array (PGA), a field programmable gate array (FPGA) and the like.

In the description of the specification, the description of reference terms "an embodiment", "some embodiments", "example", "specific example" or "some examples" and the like means that specific features, structures, materials or features described in combination with the embodiment(s) or example(s) are included in at least one embodiment or example of the present invention. In the specification, schematic expression of the above terms may not necessarily refer to the same embodiment or example. Moreover, the described specific features, structures, materials or features may be combined in an appropriate manner in any one or more embodiments or examples.

Although the embodiments of the present invention have been illustrated and described, those of ordinary skill in the art can understand that variations, modifications, replacements and transformations can be made to the embodiments without departing from the principle and purpose of the present invention, and the scope of the present invention is defined by the claims and equivalents thereof.

## Claims

1. An information processing system for a car, comprising a mobile terminal and an in-vehicle device,
wherein the in-vehicle device comprises:
a communication module, configured to communicate with the mobile terminal; and
an information station, configured to receive a query instruction sent by the mobile terminal via the communication module, to acquire vehicle condition information of the car according to the query instruction, to send the acquired vehicle condition information to the mobile terminal via the communication module, and/or to push the acquired vehicle condition information to the mobile terminal via the communication module at preset time intervals.

2. The information processing system for a car according to claim 1, wherein the in-vehicle device further comprises:
a DCM server, connected with the information station, and configured to detect the vehicle condition information of the car in real time, to generate CAN message data information of the car according to the detected vehicle condition information when the query instruction is received from the information station, and to send the CAN message data information to the information station;
wherein the information station is configured to send the received CAN message data information to the mobile terminal via the communication module.

3. The information processing system for a car according to claim 1, further comprising:
a cloud server, configured to receive the vehicle condition information uploaded by the mobile terminal, and to store the vehicle condition information.

4. The information processing system for a car according to claim 2, further comprising:
a cloud server, configured to receive the CAN message data information uploaded by the DCM server, and store the CAN message data information.

5. The system according to claims 3 or 4, wherein
the cloud server is further configured to receive login information sent by the mobile terminal, to authenticate the login information, and to send stored history vehicle condition information to the mobile terminal when the authentication is passed.

6. The system according to any one of claims 3 to 5, wherein the cloud server is further configured to analyze the vehicle condition information to acquire state management information of the car, and to push the state management information to the mobile terminal.

7. The system according to claim 1, wherein
the mobile terminal is configured to encrypt the query instruction and then to send the encrypted query instruction to the information station via the communication module of the in-vehicle device; and
the information station is configured to decrypt the encrypted query instruction after receiving the encrypted query instruction, and to acquire the vehicle condition information of the car according to the query instruction when determining that a user is an authorized user, and to send the acquired vehicle condition information to the mobile terminal via the communication module.

8. The system according to any one of claims 1 to 7, wherein the vehicle condition information comprises at least any one of the following:
total fuel consumption, total distance, average fuel consumption, vehicle states, and wear conditions of parts.

9. The system according to claim 2, wherein the DCM server is further configured to push the updated CAN message data information to the information station at preset time intervals, and
the information station is further configured to push the received updated CAN message data information to the mobile terminal via the communication module, such that the mobile terminal updates the CAN message data information stored in the mobile terminal with the pushed updated CAN message data information.

10. An information processing method for a car, comprising:
receiving a query instruction sent by a mobile terminal;
acquiring vehicle condition information of the car according to the query instruction; and
sending the acquired vehicle condition information to the mobile terminal.

11. The method according to claim 10, wherein the sending the acquired vehicle condition information to the mobile terminal specifically comprises:
generating CAN message data information of the car according to the acquired vehicle condition information; and
sending the received CAN message data information to the mobile terminal.

12. The method according to claim 11, further comprising:
uploading the vehicle condition information to a cloud server, and storing the vehicle condition information in the cloud server.

13. The method according to any one of claims 10 to 12, wherein the vehicle condition information at least comprises any one of the following:
total fuel consumption, total distance, average fuel consumption, vehicle states and wear conditions of parts.

14. The method according to claim 11, further comprising:
pushing updated CAN message data information to the mobile terminal at preset time intervals, such that the mobile terminal updates the CAN message data information stored in the mobile terminal with the pushed updated CAN message data information.

15. An in-vehicle device, installed in a vehicle and configured to exchange information with a mobile terminal, comprising:
a communication module, configured to communicate with the mobile terminal; and
an information station, configured to receive a query instruction sent by the mobile terminal via the communication module, to acquire vehicle condition information of the car according to the query instruction, to acquire the acquired vehicle condition information to the mobile terminal via the communication module, and/or to push the acquired vehicle condition information to the mobile terminal via the communication module at preset time intervals.

16. The in-vehicle device according to claim 15, further comprising:
a DCM server, connected with the information station, and configured to detect the vehicle condition information of the car in real time, to generate CAN message data information of the car according to the detected vehicle condition information when the query instruction is received from the information station, and to send the CAN message data information to the information station;
wherein the information station is configured to send the received CAN message data information to the mobile terminal via the communication module.

17. The in-vehicle device according to claims 15 or 16, wherein the vehicle condition information at least comprises any one of the following:
total fuel consumption, total distance, average fuel consumption, vehicle states and wear conditions of parts.

18. The in-vehicle device according to claim 16, wherein the DCM server is further configured to push updated CAN message data information to the information station at preset time intervals, and
the information station is configured to push the received updated CAN message data information to the mobile terminal via the communication module, such that the mobile terminal updates the CAN message data information stored in the mobile terminal with the pushed updated CAN message data information.

19. A storage medium, configured to store an application program, wherein the application program, is configured to perform the method according to any one of claims 10 to 14 during operation
